# EUROPÄISCHE PATENTSCHRIFT

(11) **EP 3 620 148 B1**
(45) Veröffentlichungstag und Bekanntmachung des Hinweises auf die Patenterteilung: **21.04.2021**
(21) Anmeldenummer: 19193961.0
(22) Anmeldetag: 28.08.2019
(51) Int. Cl.: A61G 15/14, A61G 15/16, F16M 11/00

(54) **DENTALE BEHANDLUNGSEINHEIT MIT EINEM GELENKTEIL, EINEM SCHWENKARM UND EINER BREMSANORDNUNG**
DENTAL TREATMENT UNIT WITH AN ARTICULATED PART, A SWING ARM AND A BRAKE ARRANGEMENT
UNITÉ DE TRAITEMENT DENTAIRE DOTÉE D'UNE PARTIE ARTICULÉE, D'UN BRAS PIVOTANT ET D'UN DISPOSITIF DE FREINAGE

(30) Priorität: 28.08.2018 DE 102018120937
(43) Veröffentlichungstag der Anmeldung: 11.03.2020
(73) Patentinhaber: KaVo Dental GmbH, 88400 Biberach (DE)
(72) Erfinder: Ruhdorf, Thomas, 89584 Ehingen (DE)
(74) Vertreter: Thun, Clemens

(56) Entgegenhaltungen:
- EP-A1- 1 374 823
- DE-A1-102011 004 370
- US-A- 3 033 628
- US-A- 4 013 328

## Beschreibung

Die Erfindung betrifft eine dentale Behandlungseinheit mit einem Gelenkteil, einem Schwenkarm und einer Bremsanordnung.

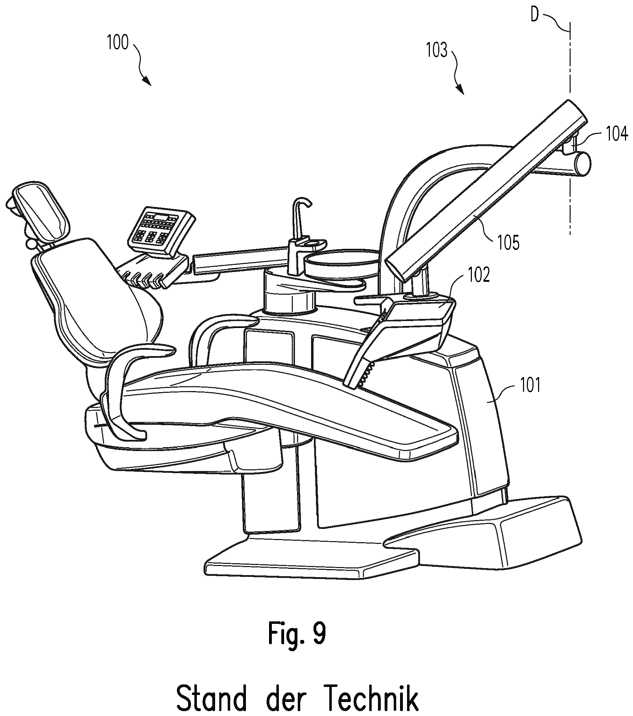

In Fig. 9 ist eine dentale Behandlungseinheit 100 gemäß dem Stand der Technik skizziert. Die dentale Behandlungseinheit 100 weist ein Basiselement 101 auf, das dazu vorgesehen ist, auf einen Boden eines Behandlungsraums gestellt zu werden. Weiter umfasst die Behandlungseinheit 100 ein so genanntes Arztelement 102, an dem dentale Instrumente in köcherartigen Ablagen gehalten sind. Das Arztelement 102 ist gegenüber dem Basiselement 101 mittels einer Tragarmvorrichtung 103 schwenkbar gehalten. Die Tragarmvorrichtung 103 umfasst dabei ein Gelenkteil 104 und einen Schwenkarm 105, der um eine vertikale Drehachse D schwenkbar gegenüber dem Gelenkteil 104 angeordnet ist. Zur Hemmung der Schwenkbeweglichkeit ist eine Bremsanordnung vorgesehen, die eine mit Bezug auf die Drehachse D radial wirkende Schraube aufweist. Durch Drehen der Schraube lässt sich die Stärke der Hemmung der Schwenkbeweglichkeit regulieren. Allerdings besteht hierbei insbesondere durch Verschleißerscheinungen die Gefahr, dass die Stärke der Hemmung im Laufe der Zeit in unerwünschter Weise abnimmt.

Der Erfindung liegt die Aufgabe zu Grunde, eine dentale Behandlungseinheit mit einer entsprechenden verbesserten oder alternativen Bremsanordnung anzugeben.

Diese Aufgabe wird gemäß der Erfindung mit dem in dem unabhängigen Anspruch genannten Gegenstand gelöst. Besondere Ausführungsarten der Erfindung sind in den abhängigen Ansprüchen angegeben.

Gemäß der Erfindung ist eine dentale Behandlungseinheit vorgesehen, die ein Gelenkteil aufweist, einen Schwenkarm, der um eine Drehachse schwenkbar gegenüber dem Gelenkteil angeordnet ist, sowie eine Bremsanordnung zur Hemmung der Schwenkbeweglichkeit des Schwenkarms um die Drehachse. Dabei weist die Bremsanordnung einen durch Scheiben gebildeten Stapel auf, wobei die Scheiben unter einem Anpressdruck stehend aneinander anliegen. Die Scheiben umfassen dabei mehrere erste Scheiben aus einem ersten Material und mehrere zweite Scheiben aus einem zweiten Material, wobei die ersten Scheiben drehfest gegenüber dem Schwenkarm angeordnet sind und die zweiten Scheiben drehfest gegenüber dem Gelenkteil.

Durch die Verwendung der Scheiben lässt sich eine besonders zuverlässige Wirkung der Bremsanordnung erzielen.

Vorzugsweise sind die ersten Scheiben und die zweiten Scheiben jeweils ringförmig ausgebildet und bilden einen Stapel, der zentrisch zur Drehachse in Achsrichtung erstreckend angeordnet ist. So lässt sich insbesondere erzielen, dass die Hemmung mit Bezug auf die Drehachse besonders gleichmäßig wirkt.

Eine besonders effektive Bremswirkung bzw. Hemmung lässt sich erzielen, wenn die ersten Scheiben und die zweiten Scheiben alternierend in dem Stapel angeordnet sind.

Vorzugsweise bestehen die ersten Scheiben aus einem Kunststoff und die zweiten Scheiben aus einem Metall oder alternativ hierzu, die ersten Scheiben aus einem Metall und die zweiten Scheiben aus einem Kunststoff. Diese Materialkombination hat sich als besonders wirkungsvoll herausgestellt.

Vorzugsweise weist der Schwenkarm eine, mit Bezug auf die Drehachse sich radial erstreckende Ausnehmung auf, wobei die ersten Scheiben jeweils einen radial nach außen gerichteten Fortsatz aufweisen, der zur Erzielung der drehfesten Anordnung der ersten Scheiben gegenüber dem Schwenkarm in die radiale Ausnehmung des Schwenkarms eingreift. So lässt sich die drehfeste Anordnung zwischen den ersten Scheiben und dem Schwenkarm auf herstellungstechnisch vorteilhafte Weise besonders zuverlässig gestalten.

Vorzugsweise weist das Gelenkteil eine, mit Bezug auf die Drehachse sich radial erstreckende Ausnehmung auf, wobei die zweiten Scheiben jeweils einen radial einwärts gerichteten Fortsatz aufweisen, der zur Erzielung der drehfesten Anordnung der zweiten Scheiben gegenüber dem Gelenkteil in die radiale Ausnehmung des Gelenkteils eingreift. So lässt sich die drehfeste Anordnung zwischen den zweiten Scheiben und dem Gelenkteil auf herstellungstechnisch vorteilhafte Weise besonders zuverlässig gestalten.

Vorzugsweise weist der Schwenkarm einen hohlzylinderartigen Endbereich auf, wobei das Gelenkteil durch eine Stange gebildet ist, welche die Drehachse festlegt und wobei die Stange mit einem Ende in den hohlzylinderartigen Endbereich des Schwenkarms eingreift. So lässt sich eine besonders zuverlässige gelenkige Verbindung zwischen dem Gelenkteil und dem Schwenkarm erzielen.

Vorzugsweise weist der hohlzylinderartige Endbereich des Schwenkarms dabei einen Abschnitt mit einem erweiterten Innendurchmesser zur Aufnahme des durch die Scheiben gebildeten Stapels auf, wobei das Ende der Stange in den Abschnitt mit dem erweiterten Innendurchmesser eingreift. So lässt sich erzielen, dass die Scheiben gut gelagert sind und besonders gut ihre Wirkung entfalten können.

Vorzugsweise weist die Bremsanordnung weiterhin einen Bremshebel auf, durch den der Anpressdruck einstellbar ist, unter dem der Stapel der Scheiben steht. Durch den Bremshebel lässt sich die Bremswirkung besonders vorteilhaft einstellen.

Eine besonders gleichmäßige Bremswirkung lässt sich dabei vorteilhaft erzielen, wenn der Bremshebel zur Erzielung des Anpressdrucks zwei Arme aufweist, welche auf den Stapel der Scheiben drücken.

Vorzugsweise weist die Behandlungseinheit weiterhin eine, mit Bezug auf den Stapel der Scheiben auf einer ersten Seite angeordnete Schraubanordnung auf, durch die der durch den Bremshebel ausgeübte Druck bzw. Anpressdruck einstellbar ist. So lässt sich die Stärke der Bremswirkung besonders gut einstellen.

Dabei weist der Schwenkarm weiterhin vorzugsweise mit Bezug auf den Stapel der Scheiben auf einer, der ersten Seite entgegengesetzten zweiten Seite zwei Öffnungen auf, wobei die zwei Arme des Bremshebels mit ihren freien Endbereichen jeweils in eine Öffnung eingreifen. So lässt sich eine geeignete Abstützung für den Bremshebel bzw. dessen Arme bewirken.

Vorzugsweise weist der Schwenkarm einen gabelartigen Endbereich auf, der mit zwei Armen das Gelenkteil umgreift, wobei beide Arme jeweils eine Öffnung aufweisen und eine Achsstange sowohl das Gelenkteil als auch die Arme des Schwenkarms durchgreift und drehfest mit dem Gelenkteil verbunden ist. Diese Ausführung eignet sich besonders, wenn die Drehachse horizontal verläuft.

Vorzugsweise weist dabei die Öffnung eines der beiden Arme des Schwenkarms einen erweiterten Innendurchmesser zur Aufnahme des durch die Scheiben gebildeten Stapels auf. So lässt sich durch die Scheiben eine besonders gute Bremswirkung erzielen.

Vorzugsweise ist dabei die Öffnung mit dem erweiterten Innendurchmesser mit einem Innengewinde versehen, wobei mittels einer in die Öffnung einschraubbaren Stellschraube der auf den Stapel der Scheiben ausgeübte Anpressdruck einstellbar ist. So lässt sich erzielen, dass die Bremswirkung besonders handhabungsfreundlich eingestellt werden kann.

Die Erfindung wird im Folgenden anhand von Ausführungsbeispielen und mit Bezug auf die Zeichnungen näher erläutert. Es zeigen:
- Fig. 1: eine perspektivische Skizze nach Art einer Explosionsdarstellung zu einem ersten Ausführungsbeispiel einer anmeldungsgemäßen Behandlungseinheit,
- Fig. 2: eine etwas detailliertere Darstellung hierzu,
- Fig. 3: eine Darstellung hierzu in einem zusammengebauten Zustand,
- Fig. 4: eine Querschnitt-Skizze entlang der Drehachse durch den Gelenkbereich,
- Fig. 5: eine weitere Querschnitt-Skizze hierzu, wobei der Schnitt parallel zu der Drehachse auf Höhe des einen der beiden Arme des Bremshebels gelegt ist,
- Fig. 6: eine perspektivische Skizze zu einem zweiten Ausführungsbeispiel einer anmeldungsgemäßen Behandlungseinheit,
- Fig. 7: eine weitere Skizze hierzu nach Art einer Explosionsdarstellung,
- Fig. 8: eine Aufsicht auf den Gelenkbereich in Explosionsdarstellung und
- Fig. 9: eine Skizze einer dentalen Behandlungseinheit nach dem Stand der Technik.

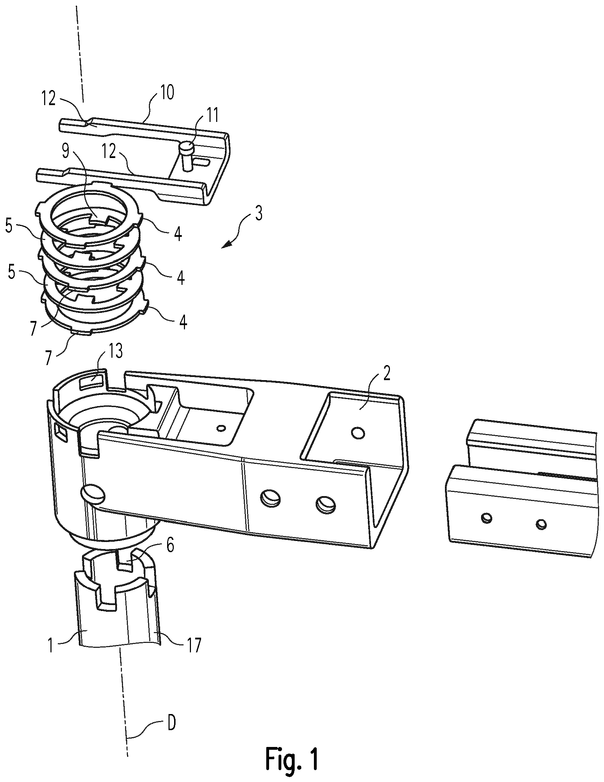

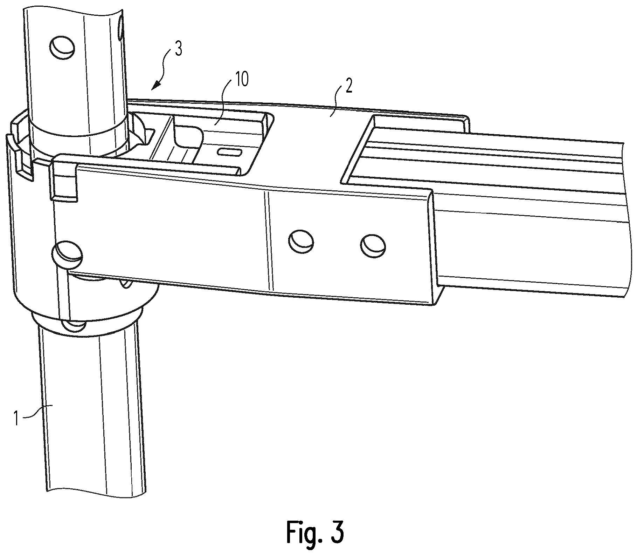

Fig. 1 zeigt eine perspektivische Skizze nach Art einer Explosionsdarstellung zu einem ersten Ausführungsbeispiel einer anmeldungsgemäßen Behandlungseinheit. Gezeigt ist dabei lediglich ein Gelenkbereich der Behandlungseinheit. Beispielsweise kann der Gelenkbereich an einer Tragarmvorrichtung der Behandlungseinheit vorgesehen sein, wie sie entsprechend in Fig. 9 als Tragarmvorrichtung 103 skizziert ist. Fig. 3 zeigt den Gelenkbereich im zusammengebauten Zustand.

Die Behandlungseinheit umfasst dabei ein Gelenkteil 1, hier in Form einer Stange, sowie einen Schwenkarm 2, der um eine Drehachse D schwenkbar gegenüber dem Gelenkteil 104 angeordnet ist. Im gezeigten Beispiel ist dabei die Drehachse D vorzugsweise vertikal orientiert. Die Drehachse D ist vorzugsweise durch eine Hauptachse der Stange festgelegt.

Zur Hemmung der Schwenkbeweglichkeit des Schwenkarms 2 um die Drehachse D weist die Behandlungseinheit weiterhin eine Bremsanordnung 3 auf. Diese Bremsanordnung 3 umfasst einen durch Scheiben 4, 5 gebildeten Stapel. Dabei liegen die Scheiben 4, 5 unter einem Anpressdruck stehend aneinander an, wobei die Scheiben 4, 5 mehrere erste Scheiben 4 aus einem ersten Material und mehrere zweite Scheiben 5 aus einem zweiten Material umfassen und wobei die ersten Scheiben 4 drehfest gegenüber dem Schwenkarm 2 angeordnet sind und die zweiten Scheiben 5 drehfest gegenüber dem Gelenkteil 1. So lässt sich erzielen, dass bei einer Schwenkbewegung des Schwenkarms 2 gegenüber dem Gelenkteil 1 die Scheiben 4, 5 aneinander reiben, so dass hierdurch die Hemmung der Schwenkbeweglichkeit erzielt wird. Vorzugsweise sind die ersten Scheiben 4 und die zweiten Scheiben 5 hierzu alternierend in dem Stapel angeordnet. Durch die ersten Scheiben 4 sind sozusagen Bremsscheiben gebildet und die zweiten Scheiben 5 Reibbeläge oder andersherum.

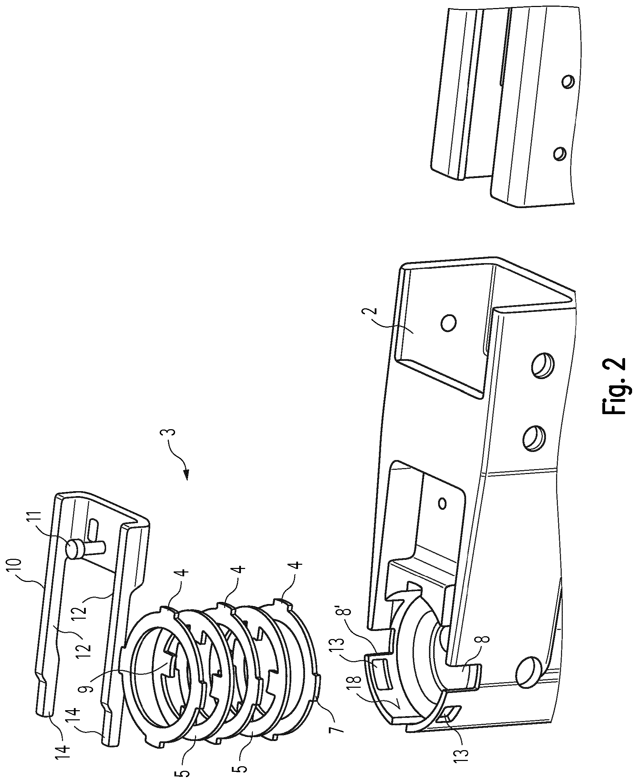

In der in Fig. 2 gezeigten etwas detaillierteren Darstellung lässt sich erkennen, das hier beispielhaft drei erste Scheiben 4 und zwei zweite Scheiben 5 alternierend angeordnet sind.

Wie im gezeigten Beispiel der Fall, sind vorzugsweise die ersten Scheiben 4 und die zweiten Scheiben 5 jeweils ringförmig ausgebildet, wobei sie den Stapel bilden. Der Stapel erstreckt sich hier zentrisch zur Drehachse D in Achsrichtung, also in einer Richtung entlang der Drehachse D. So lässt sich eine besonders gleichmäßige Wirkung der Hemmung erzielen. Die gewählte Anzahl der Scheiben 4, 5 wirkt sich auf die Stärke der Bremskraft aus. So lässt sich durch eine größere Anzahl der Scheiben 4, 5 eine größere Bremskraft erzielen.

Eine besonders geeignete Bremswirkung lässt sich erzielen, wenn die ersten Scheiben 4 aus einem Kunststoff bestehen und die zweiten Scheiben 5 aus einem Metall oder alternativ hierzu, wenn die ersten Scheiben 4 aus einem Metall bestehen und die zweiten Scheiben 5 aus einem Kunststoff. Statt des Kunststoffs kann dabei auch ein organischer Belag auf den betreffenden Scheiben vorgesehen sein.

Weiterhin alternativ können beispielsweise die ersten Scheiben 4 aus einem ersten Kunststoffmaterial bestehen und die zweiten Scheiben 5 aus einem zweiten Kunststoffmaterial.

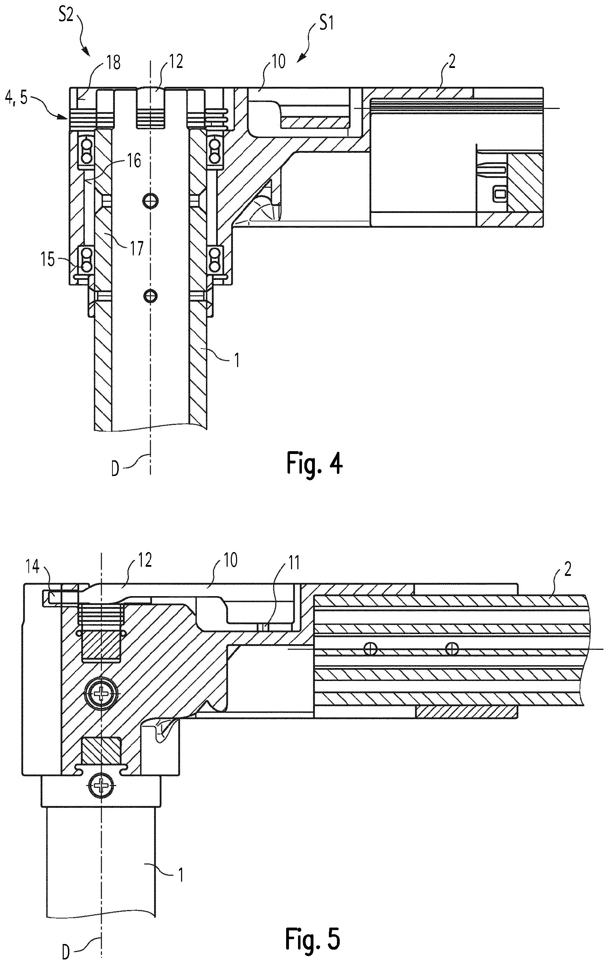

Fig. 4 zeigt einen Querschnitt durch den Gelenkbereich. Zur Lagerung des Schwenkarms 2 gegenüber dem Gelenkkörper 1 kann beispielsweise ein Kugellager 15 dienen. Alternativ kann beispielsweise ein Gleitlager vorgesehen sein oder eine passende Stahllagerung.

Wie im gezeigten Beispiel der Fall, weist der Schwenkarm 2 vorzugsweise eine, mit Bezug auf die Drehachse D sich radial nach außen erstreckende Ausnehmung 8 auf, wobei die ersten Scheiben 4 jeweils einen radial nach außen gerichteten Fortsatz 7 aufweisen, der zur Erzielung der drehfesten Anordnung der ersten Scheiben 4 gegenüber dem Schwenkarm 2 in die radiale Ausnehmung 8 des Schwenkarms 2 eingreift. Eine besonders geeignete drehfeste Anordnung lässt sich dabei erzielen, wenn der Schwenkarm 2 außerdem wenigstens eine weitere entsprechende Ausnehmung 8' aufweist und die ersten Scheiben 4 jeweils wenigstens einen weiteren entsprechenden Fortsatz, der zur Erzielung der drehfesten Anordnung in analoger Weise in die wenigstens eine weitere entsprechende Ausnehmung 8' des Schwenkarms 2 eingreift. Im gezeigten Beispiel sind genau vier entsprechende Ausnehmungen 8, 8' und genau vier entsprechende Fortsätze vorgesehen.

Weiter vorzugsweise weist das Gelenkteil 1 eine, mit Bezug auf die Drehachse D sich radial erstreckende Ausnehmung 6 auf und die zweiten Scheiben 5 jeweils einen radial einwärts gerichteten Fortsatz 9, der zur Erzielung der drehfesten Anordnung der zweiten Scheiben 4 gegenüber dem Gelenkteil 1 in die radiale Ausnehmung 6 des Gelenkteils 1 eingreift. Auch hier können mehrere entsprechende Ausnehmungen 6 und Fortsätze 9 vorgesehen sein, beispielsweise - wie im gezeigten Beispiel der Fall - genau vier.

Bei der in Fig. 1 gezeigten Ausgestaltung weist der Schwenkarm 2 einen hohlzylinderartigen Endbereich 16 auf, wobei das Gelenkteil 1, hier also die Stange, mit einem Ende 17 in den hohlzylinderartigen Endbereich 16 des Schwenkarms 2 eingreift. Wie weiterhin beim gezeigten Beispiel der Fall, weist dabei der hohlzylinderartige Endbereich 16 des Schwenkarms 2 vorzugsweise einen Abschnitt 18 mit einem erweiterten Innendurchmesser zur Aufnahme des durch die Scheiben 4, 5 gebildeten Stapels auf, wobei das Ende 17 der Stange in den Abschnitt 18 mit dem erweiterten Innendurchmesser eingreift. Dies geht so auch aus der Querschnittdarstellung der Fig. 4 hervor.

Um eine besonders geeignete Einstellbarkeit der Bremsstärke zu erzielen, weist die Bremsanordnung 3 vorzugsweise weiterhin einen Bremshebel 10 auf, durch den der Anpressdruck einstellbar ist, unter dem der Stapel der Scheiben 4, 5 steht. Dabei weist der Bremshebel 10 zur Erzielung des Anpressdrucks vorzugsweise zwei Arme 12 auf, welche auf den Stapel der Scheiben 4, 5 drücken. Einer der beiden Arme 12 ist auch in Fig. 5 zu erkennen, die einen Querschnitt parallel zur Drehachse D auf Höhe des einen Armes 12 zeigt. Durch die zwei Arme 12 lässt sich erzielen, dass der auf die Scheiben 4, 5 wirkende Anpressdruck besonders gleichmäßig wirkt.

Weiterhin vorzugsweise weist die Behandlungseinheit eine, mit Bezug auf den Stapel der Scheiben 4, 5 auf einer ersten Seite S1 angeordnete Schraubanordnung 11 auf, durch die der durch den Bremshebel 10 ausgeübte Anpressdruck einstellbar ist. Die Schraubanordnung 11 umfasst vorzugsweise eine Schraube, die eine Durchgangsöffnung des Bremshebels 10 durchsetzt und in eine Gewindebohrung des Schwenkarms 2 eingeschraubt ist.

Dabei weist der Schwenkarm 2 weiterhin mit Bezug auf den Stapel der Scheiben 4, 5 auf einer, der ersten Seite S1 entgegengesetzten zweiten Seite S2 zwei Öffnungen 13 auf, wobei die zwei Arme 12 des Bremshebels 10 mit ihren freien Endbereichen 14 jeweils in eine Öffnung 13 eingreifen. So lässt sich geeignet eine Abstützung zur Aufnahme der am Bremshebel 10 wirkenden Gegenkraft erzielen.

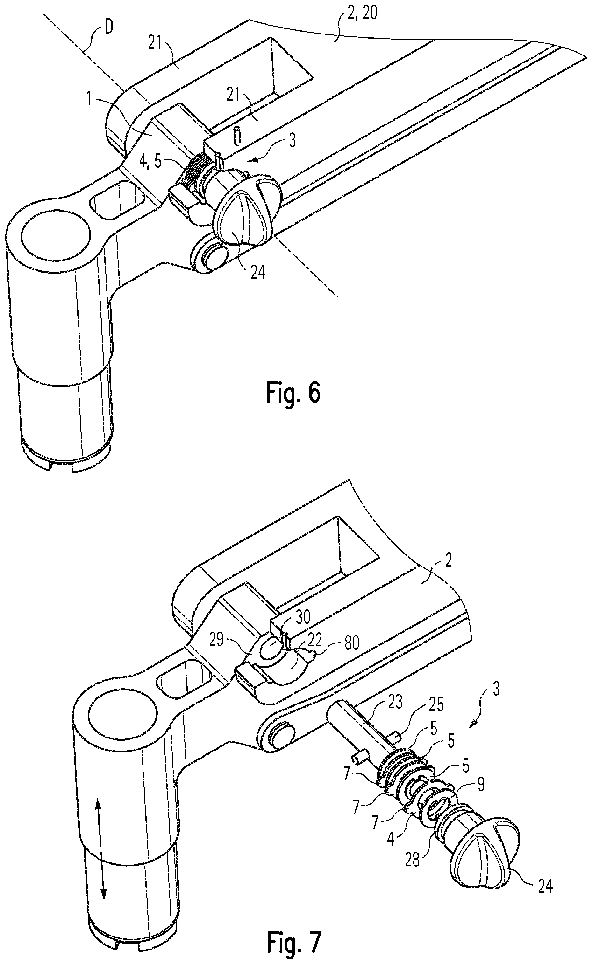

In den Figuren 6 bis 8 ist ein zweites Ausführungsbeispiel einer anmeldungsgemäßen dentalen Behandlungseinheit skizziert. Soweit im Folgenden nicht anders angegeben, gelten die obigen Ausführungen auch hier in analoger Weise. Die Bezugszeichen sind analog gebraucht.

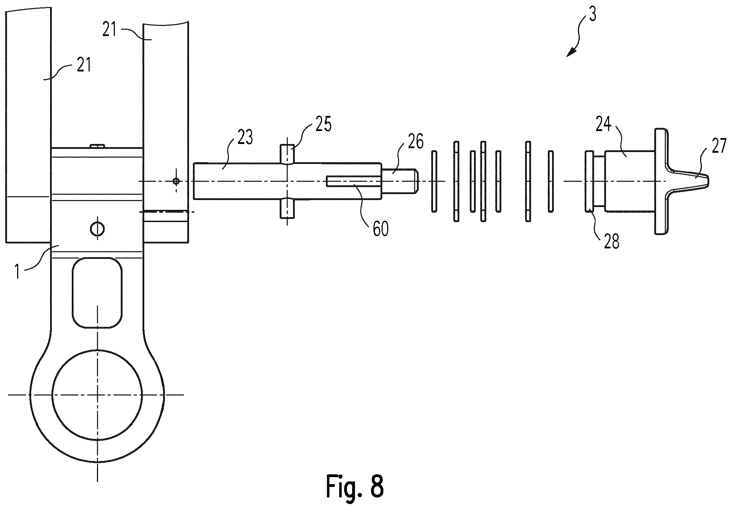

In Fig. 6 ist eine perspektivische Skizze des Gelenkbereichs gezeigt. Fig. 7 zeigt eine entsprechende Skizze nach Art einer Explosionsdarstellung und Fig. 8 eine entsprechende Aufsicht. Bei dieser Gestaltung weist der Schwenkarm 2 einen gabelartigen Endbereich 20 auf, der mit zwei Armen 21 das Gelenkteil 1 umgreift. Dabei weisen die beiden Arme 21 jeweils eine Öffnung 22 auf. In den Zeichnungen der Figuren 6 und 7 ist die vordere der beiden Öffnungen 22 aufgeschnitten skizziert, um Teile der Anordnung deutlicher zu zeigen. Die Drehachse D kann hier insbesondere horizontal vorgesehen sein.

Eine Achsstange 23 durchgreift sowohl das Gelenkteil 1 als auch die Arme 21 des Schwenkarms 2. Dabei ist die Achsstange 23 drehfest mit dem Gelenkteil 1 verbunden. Hierzu kann beispielsweise ein quer zur Achsstange 23 verlaufender Stift 25 dienen.

Die Scheiben 4, 5 sind hierbei um die Achsstange 23 herum angeordnet. Dabei liegen die Scheiben 4, 5 auf einer Seite an dem Gelenkteil 1 an. Im gezeigten Beispiel weist das Gelenkteil 1 eine Durchgangsöffnung 30 auf, wobei die Achsstange 23 die Durchgangsöffnung 30 durchsetzt. Dabei umgreifen die Scheiben 4, 5 die Achsstange 23 und liegen gegen einen, normal zur Drehachse D geformten Seitenwandbereich 29 des Gelenkteils 1 an.

Die Öffnung 22 eines der beiden Arme 21 des Schwenkarms 2 weist dabei einen erweiterten Innendurchmesser zur Aufnahme des durch die Scheiben 4, 5 gebildeten Stapels auf. Dabei ist die Öffnung 22 mit dem erweiterten Innendurchmesser mit einem Innengewinde versehen ist, wobei mittels einer in die Öffnung 22 einschraubbaren Stellschraube 24 der auf den Stapel der Scheiben 4, 5 ausgeübte Anpressdruck einstellbar ist.

Die Stellschraube 24 weist hierzu vorzugsweise einen hohlzylinderförmigen Ansatz auf, der einen Endbereich 26 der Achsstange 23 umgreift. Dabei ist die Gestaltung weiterhin vorzugsweise derart, dass ein Endbereich 28 des hohlzylinderförmigen Ansatzes mit einem Anpressdruck gegen die Scheiben 4, 5 drückt, wobei durch ein Drehen der Stellschraube 24 die Scheiben 4, 5 mehr oder weniger gegen das Gelenkteil 1 bzw. dessen Seitenwandbereich 29 gedrückt werden, so dass auf diese Weise die Stärke des Anpressdrucks und somit die Stärke der Bremswirkung eingestellt werden kann.

Weiterhin vorzugsweise weist die Stellschraube 24 einen Griffbereich 27 auf, der zur manuellen Betätigung der Stellschraube 24 dient. So lässt sich besonders handhabungsfreundlich die Bremsstärke einstellen.

Die ersten Scheiben 4 weisen vorzugsweise jeweils wenigstens einen Fortsatz 7 auf, der radial nach außen gerichtet ist, wobei in der Öffnung 22 mit dem erweiterten Innendurchmesser wenigstens eine sich radial nach außen erstreckende Ausnehmung in Form einer Nut 80 ausgebildet ist und die Fortsätze 7 zur Erzielung der drehfesten Anordnung der ersten Scheiben 4 gegenüber dem Schwenkarm 2 jeweils mit ihrem wenigstens einen Fortsatz 7 in die wenigstens eine Nut 80 eingreifen. Vorzugsweise erstreckt sich die Nut 80 parallel zur Drehachse D.

Die Achsstange 23 weist vorzugsweise wenigstens eine Nut 60 auf, die sich insbesondere parallel zur Drehachse D erstreckt, und wobei die zweiten Scheiben 5 jeweils wenigstens einen radial nach innen gerichteten Fortsatz 9 aufweisen, der zur Erzielung der drehfesten Anordnung der zweiten Scheiben 4 gegenüber der Achsstange 23 und somit auch gegenüber dem Gelenkteil 1 in die wenigstens eine Nut 60 der Achsstange 23 eingreift.

## Patentansprüche

1. Dentale Behandlungseinheit, aufweisend
- ein Gelenkteil (1),
- einen Schwenkarm (2), der um eine Drehachse (D) schwenkbar gegenüber dem Gelenkteil (1) angeordnet ist, sowie
- eine Bremsanordnung (3) zur Hemmung der Schwenkbeweglichkeit des Schwenkarms (2) um die Drehachse (D),
**dadurch gekennzeichnet,**
**dass** die Bremsanordnung (3) einen durch Scheiben (4, 5) gebildeten Stapel aufweist, wobei die Scheiben (4, 5) unter einem Anpressdruck stehend aneinander anliegen, wobei die Scheiben (4, 5) mehrere erste Scheiben (4) aus einem ersten Material und mehrere zweite Scheiben (5) aus einem zweiten Material umfassen und wobei die ersten Scheiben (4) drehfest gegenüber dem Schwenkarm (2) angeordnet sind und die zweiten Scheiben (5) drehfest gegenüber dem Gelenkteil (1).

2. Dentale Behandlungseinheit nach Anspruch 1,
**dadurch gekennzeichnet,**
**dass** die ersten Scheiben (4) und die zweiten Scheiben (5) jeweils ringförmig ausgebildet sind und einen Stapel bilden, der zentrisch zur Drehachse (D) in Achsrichtung erstreckend angeordnet ist.

3. Dentale Behandlungseinheit nach Anspruch 1 oder 2,
**dadurch gekennzeichnet,**
**dass** die ersten Scheiben (4) und die zweiten Scheiben (5) alternierend in dem Stapel angeordnet sind.

4. Dentale Behandlungseinheit nach einem der vorhergehenden Ansprüche,
**dadurch gekennzeichnet,**
**dass** die ersten Scheiben (4) aus einem Kunststoff bestehen und die zweiten Scheiben (5) aus einem Metall oder alternativ hierzu, dass die ersten Scheiben (4) aus einem Metall bestehen und die zweiten Scheiben (5) aus einem Kunststoff.

5. Dentale Behandlungseinheit nach einem der vorhergehenden Ansprüche,
**dadurch gekennzeichnet,**
**dass** der Schwenkarm (2) eine, mit Bezug auf die Drehachse (D) sich radial erstreckende Ausnehmung (8, 80) aufweist und die ersten Scheiben (4) jeweils einen radial nach außen gerichteten Fortsatz (7) aufweisen, der zur Erzielung der drehfesten Anordnung der ersten Scheiben (4) gegenüber dem Schwenkarm (2) in die radiale Ausnehmung (8, 80) des Schwenkarms (2) eingreift.

6. Dentale Behandlungseinheit nach einem der vorhergehenden Ansprüche,
**dadurch gekennzeichnet,**
**dass** das Gelenkteil (1) eine, mit Bezug auf die Drehachse (D) sich radial erstreckende Ausnehmung (6) aufweist und die zweiten Scheiben (5) jeweils einen radial einwärts gerichteten Fortsatz (9) aufweisen, der zur Erzielung der drehfesten Anordnung der zweiten Scheiben (4) gegenüber dem Gelenkteil (1) in die radiale Ausnehmung (6) des Gelenkteils (1) eingreift.

7. Dentale Behandlungseinheit nach einem der vorhergehenden Ansprüche,
**dadurch gekennzeichnet,**
**dass** der Schwenkarm (2) einen hohlzylinderartigen Endbereich (16) aufweist und das Gelenkteil (1) durch eine Stange gebildet ist, welche die Drehachse (D) festlegt und mit einem Ende (17) in den hohlzylinderartigen Endbereich (16) des Schwenkarms (2) eingreift.

8. Dentale Behandlungseinheit nach Anspruch 7,
**dadurch gekennzeichnet,**
**dass** der hohlzylinderartige Endbereich (16) des Schwenkarms (2) einen Abschnitt (18) mit einem erweiterten Innendurchmesser zur Aufnahme des durch die Scheiben (4, 5) gebildeten Stapels aufweist, wobei das Ende (17) der Stange in den Abschnitt (18) mit dem erweiterten Innendurchmesser eingreift.

9. Dentale Behandlungseinheit nach Anspruch 7 oder 8,
**dadurch gekennzeichnet,**
**dass** die Bremsanordnung (3) weiterhin einen Bremshebel (10) aufweist, durch den der Anpressdruck einstellbar ist, unter dem der Stapel der Scheiben (4, 5) steht.

10. Dentale Behandlungseinheit nach Anspruch 9,
**dadurch gekennzeichnet,**
**dass** der Bremshebel (10) zur Erzielung des Anpressdrucks zwei Arme (12) aufweist, welche auf den Stapel der Scheiben (4, 5) drücken.

11. Dentale Behandlungseinheit nach Anspruch 9 oder 10,
**gekennzeichnet durch**
eine, mit Bezug auf den Stapel der Scheiben (4, 5) auf einer ersten Seite (S1) angeordnete Schraubanordnung (11), durch die der durch den Bremshebel (10) ausgeübte Druck einstellbar ist.

12. Dentale Behandlungseinheit nach Anspruch 10 und Anspruch 11,
**dadurch gekennzeichnet,**
**dass** der Schwenkarm (2) mit Bezug auf den Stapel der Scheiben (4, 5) auf einer, der ersten Seite (S1) entgegengesetzten zweiten Seite (S2) zwei Öffnungen (13) aufweist, wobei die zwei Arme (12) des Bremshebels (10) mit ihren freien Endbereichen (14) jeweils in eine Öffnung (13) eingreifen.

13. Dentale Behandlungseinheit nach einem der Ansprüche 1 bis 6,
**dadurch gekennzeichnet,**
**dass** der Schwenkarm (2) einen gabelartigen Endbereich (20) aufweist, der mit zwei Armen (21) das Gelenkteil (1) umgreift, wobei beide Arme (21) jeweils eine Öffnung (22) aufweisen und eine Achsstange (23) sowohl das Gelenkteil (1) als auch die Arme (21) des Schwenkarms (2) durchgreift und drehfest mit dem Gelenkteil (1) verbunden ist.

14. Dentale Behandlungseinheit nach Anspruch 13,
**dadurch gekennzeichnet,**
**dass** die Öffnung (22) eines der beiden Arme (21) des Schwenkarms (2) einen erweiterten Innendurchmesser zur Aufnahme des durch die Scheiben (4, 5) gebildeten Stapels aufweist.

15. Dentale Behandlungseinheit nach Anspruch 14,
**dadurch gekennzeichnet,**
**dass** die Öffnung mit dem erweiterten Innendurchmesser mit einem Innengewinde versehen ist, wobei mittels einer in die Öffnung einschraubbaren Stellschraube (24) der auf den Stapel der Scheiben (4, 5) ausgeübte Anpressdruck einstellbar ist.

## Claims

1. Dental treatment unit, having
- a joint part (1),
- a swing arm (2), which is arranged to be pivotable relative to the joint part (1) about a rotation axis (D), and
- a brake arrangement (3) for inhibiting the pivotability of the swing arm (2) about the rotation axis (D),
**characterized in that**
the brake arrangement (3) has a stack formed by discs (4, 5), wherein the discs (4, 5) bear on each other under a contact pressure, wherein the discs (4, 5) comprise a plurality of first discs (4) of a first material and a plurality of second discs (5) of a second material, and wherein the first discs (4) are arranged in a rotationally fixed manner relative to the swing arm (2) and the second discs (5) are arranged in a rotationally fixed manner relative to the joint part (1).

2. Dental treatment unit according to Claim 1, **characterized in that**
the first discs (4) and the second discs (5) are each of a ring-shaped configuration and form a stack which is arranged extending in an axial direction centrally with respect to the rotation axis (D).

3. Dental treatment unit according to Claim 1 or 2, **characterized in that**
the first discs (4) and the second discs (5) are arranged in alternation in the stack.

4. Dental treatment unit according to one of the preceding claims,
**characterized in that**
the first discs (4) are made of a plastic and the second discs (5) are made of a metal or, alternatively, **in that** the first discs (4) are made of a metal and the second discs (5) are made of a plastic.

5. Dental treatment unit according to one of the preceding claims,
**characterized in that**
the swing arm (2) has a recess (8, 80) which extends radially with respect to the rotation axis (D), and the first discs (4) each have a radially outwardly directed continuation (7) which, in order to obtain the rotationally fixed arrangement of the first discs (4) relative to the swing arm (2), engages in the radial recess (8, 80) of the swing arm (2).

6. Dental treatment unit according to one of the preceding claims,
**characterized in that**
the joint part (1) has a recess (6) which extends radially with respect to the rotation axis (D), and the second discs (5) each have a radially inwardly directed continuation (9) which, in order to obtain the rotationally fixed arrangement of the second discs (4) relative to the joint part (1), engages in the radial recess (6) of the joint part (1).

7. Dental treatment unit according to one of the preceding claims,
**characterized in that**
the swing arm (2) has a hollow cylindrical end region (16), and the joint part (1) is formed by a rod which defines the rotation axis (D) and which engages with one end (17) in the hollow cylindrical end region (16) of the swing arm (2).

8. Dental treatment unit according to Claim 7, **characterized in that**
the hollow cylindrical end region (16) of the swing arm (2) has a portion (18) with a widened internal diameter for receiving the stack formed by the discs (4, 5), wherein the end (17) of the rod engages in the portion (18) with the widened internal diameter.

9. Dental treatment unit according to Claim 7 or 8, **characterized in that**
the brake arrangement (3) moreover has a brake lever (10) that is able to adjust the contact pressure acting on the stack of discs (4, 5).

10. Dental treatment unit according to Claim 9, **characterized in that**
the brake lever (10), in order to obtain the contact pressure, has two arms (12) which press on the stack of discs (4, 5).

11. Dental treatment unit according to Claim 9 or 10, **characterized by**
a screw arrangement (11) which is arranged on a first side (S1) with respect to the stack of discs (4, 5) and by which the pressure exerted by the brake lever (10) is adjustable.

12. Dental treatment unit according to Claim 10 and Claim 11,
**characterized in that**
the swing arm (2) has two openings (13) on a second side (S2) opposite the first side (S1) with respect to the stack of discs (4, 5), wherein the two arms (12) of the brake lever (10) engage with their free end regions (14) in a respective opening (13).

13. Dental treatment unit according to one of Claims 1 to 6,
**characterized in that**
the swing arm (2) has a fork-like end region (20) which with two arms (21) engages around the joint part (1), wherein both arms (21) each have an opening (22), and an axial rod (23) engages through both the joint part (1) and the arms (21) of the swing arm (2) and is connected in a rotationally fixed manner to the joint part (1).

14. Dental treatment unit according to Claim 13, **characterized in that**
the opening (22) of one of the two arms (21) of the swing arm (2) has a widened internal diameter for receiving the stack formed by the discs (4, 5).

15. Dental treatment unit according to Claim 14, **characterized in that**
the opening with the widened internal diameter is provided with an inner thread, wherein the contact pressure exerted on the stack of discs (4, 5) is adjustable by means of an adjusting screw (24) that can be screwed into the opening.

## Revendications

1. Unité de traitement dentaire, présentant :
- une partie d'articulation (1),
- un bras pivotant (2) qui est disposé en regard de la partie d'articulation (1) de manière à pouvoir pivoter autour d'un axe de rotation (D), et
- un agencement de frein (3) pour freiner le mouvement de pivotement du bras pivotant (2) autour de l'axe de rotation (D),
**caractérisée en ce que**
l'agencement de frein (3) présente une pile formée par des disques (4, 5), les disques (4, 5) s'appliquant les uns contre les autres en étant soumis à une pression d'application, les disques (4, 5) comprenant plusieurs premiers disques (4) en un premier matériau et plusieurs deuxièmes disques (5) en un deuxième matériau, et les premiers disques (4) étant disposés de manière solidaire en rotation par rapport au bras pivotant (2) et les deuxièmes disques (5) étant disposés de manière solidaire en rotation par rapport à la partie d'articulation (1).

2. Unité de traitement dentaire selon la revendication 1,
**caractérisée en ce que**
les premiers disques (4) et les deuxièmes disques (5) sont à chaque fois réalisés sous forme annulaire et forment une pile qui est disposée de manière à s'étendre centralement par rapport à l'axe de rotation (D) dans la direction axiale.

3. Unité de traitement dentaire selon la revendication 1 ou 2,
**caractérisée en ce que**
les premiers disques (4) et les deuxièmes disques (5) sont disposés en alternance dans la pile.

4. Unité de traitement dentaire selon l'une quelconque des revendications précédentes,
**caractérisée en ce que**
les premiers disques (4) se composent d'un plastique et les deuxièmes disques (5) se composent d'un métal ou, en variante, **en ce que** les premiers disques (4) se composent d'un métal et les deuxièmes disques (5) se composent d'un plastique.

5. Unité de traitement dentaire selon l'une quelconque des revendications précédentes,
**caractérisée en ce que**
le bras pivotant (2) présente un évidement (8, 80) s'étendant radialement par rapport à l'axe de rotation (D) et les premiers disques (4) présentent à chaque fois une saillie (7) orientée radialement vers l'extérieur, qui, pour réaliser l'agencement solidaire en rotation des premiers disques (4) par rapport au bras pivotant (2), vient en prise dans l'évidement radial (8, 80) du bras pivotant (2).

6. Unité de traitement dentaire selon l'une quelconque des revendications précédentes,
**caractérisée en ce que**
la partie d'articulation (1) présente un évidement (6) s'étendant radialement par rapport à l'axe de rotation (D) et les deuxièmes disques (5) présentent à chaque fois une saillie (9) orientée radialement vers l'intérieur, qui, pour réaliser l'agencement solidaire en rotation des deuxièmes disques (4) par rapport à la partie d'articulation (1), s'engage dans l'évidement radial (6) de la partie d'articulation (1).

7. Unité de traitement dentaire selon l'une quelconque des revendications précédentes,
**caractérisée en ce que**
le bras pivotant (2) présente une région d'extrémité en forme de cylindre creux (16) et la partie d'articulation (1) est formée par une barre qui définit l'axe de rotation (D) et qui s'engage par une extrémité (17) dans la région d'extrémité en forme de cylindre creux (16) du bras pivotant (2).

8. Unité de traitement dentaire selon la revendication 7,
**caractérisée en ce que**
la région d'extrémité en forme de cylindre creux (16) du bras pivotant (2) présente une portion (18) de diamètre intérieur élargi pour recevoir la pile formée par les disques (4, 5), l'extrémité (17) de la barre s'engageant dans la portion (18) de diamètre intérieur élargi.

9. Unité de traitement dentaire selon la revendication 7 ou 8,
**caractérisée en ce que**
l'agencement de frein (3) présente en outre un levier de frein (10) par le biais duquel la pression de pressage à laquelle est soumise la pile de disques (4, 5) peut être ajustée.

10. Unité de traitement dentaire selon la revendication 9,
**caractérisée en ce que**
le levier de frein (10), pour réaliser la pression de pressage, présente deux bras (12) qui pressent sur la pile de disques (4, 5).

11. Unité de traitement dentaire selon la revendication 9 ou 10,
**caractérisée par**
un agencement de vis (11) disposé sur un premier côté (S1) par rapport à la pile de disques (4, 5), par le biais duquel la pression exercée par le levier de frein (10) peut être ajustée.

12. Unité de traitement dentaire selon la revendication 10 et la revendication 11,
**caractérisée en ce que**
le bras pivotant (2) présente, par rapport à la pile de disques (4, 5) sur un deuxième côté (S2) opposé au premier côté (S1), deux ouvertures (13), les deux bras (12) du levier de frein (10) s'engageant avec leurs régions d'extrémité libres (14) à chaque fois dans une ouverture (13).

13. Unité de traitement dentaire selon l'une quelconque des revendications 1 à 6,
**caractérisée en ce que**
le bras pivotant (2) présente une région d'extrémité en forme de fourche (20) qui vient en prise autour de la partie d'articulation (1) avec deux bras (21), les deux bras (21) présentant chacun une ouverture (22) et une barre axiale (23) traversant à la fois la partie d'articulation (1) et les bras (21) du bras pivotant (2) et étant connectée de manière solidaire en rotation à la partie d'articulation (1) .

14. Unité de traitement dentaire selon la revendication 13,
**caractérisée en ce que**
l'ouverture (22) de l'un des deux bras (21) du bras pivotant (2) présente un diamètre intérieur élargi pour recevoir la pile formée par les disques (4, 5).

15. Unité de traitement dentaire selon la revendication 14,
**caractérisée en ce que**
l'ouverture de diamètre intérieur élargi est pourvue d'un filetage intérieur, la pression de pressage exercée sur la pile de disques (4, 5) pouvant être ajustée au moyen d'une vis de réglage (24) pouvant être vissée dans l'ouverture.
